(19) Europäisches Patentamt
European Patent Office
Office européen des brevets

(11) **EP 3 591 925 B1**

(12) **EUROPÄISCHE PATENTSCHRIFT**

(45) Veröffentlichungstag und Bekanntmachung des Hinweises auf die Patenterteilung:
**26.08.2020   Patentblatt 2020/35**

(51) Int Cl.:
*H04L 29/06* (2006.01)          *H04L 9/14* (2006.01)

(21) Anmeldenummer: **18181091.2**

(22) Anmeldetag: **02.07.2018**

(54) **VERSCHLÜSSELUNGSSYSTEM FÜR VERTRAUENSUNWÜRDIGE UMGEBUNGEN**

ENCRYPTION SYSTEM FOR UNTRUSTWORTHY ENVIRONMENTS

SYSTÈME DE CHIFFREMENT POUR ENVIRONNEMENTS PEU FIABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.01.2020   Patentblatt 2020/02**

(73) Patentinhaber: **Siemens Aktiengesellschaft 80333 München (DE)**

(72) Erfinder: **Mayer, Hermann Georg 83209 Prien am Chiemsee (DE)**

(56) Entgegenhaltungen:
- **DAVID L CHAUM: "Untraceable electronic mail, return addresses, and digital pseudonyms", COMMUNICATIONS OF THE ACM, ASSOCIATION FOR COMPUTING MACHINERY, INC, UNITED STATES, Bd. 24, Nr. 2, 1. Februar 1981 (1981-02-01), Seiten 84-90, XP058273979, ISSN: 0001-0782, DOI: 10.1145/358549.358563**
- **ROGER DINGLEDINE THE FREE HAVEN PROJECT ARMAPHIREEHAVEN NET NICK MATHEWSON THE FREE HAVEN PROJECT NICKMPHIREEHAVEN NET: "Tor: The Second-Generation Onion Router", USENIX,, 27. Juli 2004 (2004-07-27), Seiten 1-18, XP061012494, [gefunden am 2004-07-27]**
- **David Goldschlag ET AL: "Onion Routing for Anonymous and Private Internet Connections", , 28. Januar 1999 (1999-01-28), XP055528915, Gefunden im Internet: URL:https://www.onion-router.net/Publicati ons/CACM-1999.pdf [gefunden am 2018-11-30]**

EP 3 591 925 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die sichere Übermittlung eines Dokuments. Insbesondere betrifft die Erfindung die Übermittlung eines Dokuments in einer nicht vertrauenswürdigen Umgebung.

Eine erste und eine zweite Partei tauschen eine Leistung und eine dazu gehörende Gegenleistung aus. Beispielsweise kann die Leistung in einem elektronischen Dokument bestehen oder dadurch repräsentiert sein, und die Gegenleistung kann eine Bezahlung betreffen, die elektronisch abgewickelt werden kann. Vertrauen sich die Parteien nicht gegenseitig, so trägt jede Partei das Risiko, dass einer erbrachten Leistung keine Gegenleistung gegenüber stehen könnte. Für dieses Problem kann ein für beide Parteien vertrauenswürdiger Notar bestellt werden, die Leistung und die Gegenleistung in Empfang nimmt, beide bewertet und nur dann weiterleitet, falls Leistung und Gegenleistung in einem vorbestimmten Verhältnis zueinander stehen.

Diese Vorgehensweise kann, insbesondere wenn der Notar eine Person ist, sehr aufwändig und kostspielig sein. Außerdem sind nicht alle Leistungen bzw. Gegenleistungen leicht zu bewerten oder zu vergleichen. Dadurch kann es zu Verzögerungen bei der Abwicklung kommen.

David L. Chaum: "Untraceable electronic mail, return addresses, and digital pseudonyms", Communications Of The ACM, Association for Computing Machinery, INC, United STates, Bd. 24, Nr. 2, 1. Februar 1981 (18'981-02.01), Seiten 84-90, betrifft ein Verfahren zur gesicherten Übermittlung von E-Mail.

Roger Dingledine, Nick Mathewson und Paul Syverson, The Free Haven Project: "TOR: The Second-Generation Onion Router". USENIX, 27. Juli 2004 (2004-06-27), Seiten 1-18, schlägt ein Übermittlungssystem mit Verschleierung eines für eine Nachricht benutzten Kommunikationswegs vor.

David Goldschlag et al.: "Onion Routing for Anonymous and Private Internet Connections" ist ebenfalls Stand der Technik.

Zum Austausch digitaler Güter, beispielsweise beim Handel eines Dokuments gegen eine Gebühr, wird eine automatisierte Vorgehensweise benötigt, die es erlaubt, auch ohne einen bestellten Notar eine Bewertung von Transaktionen durchzuführen. Die Erfindung löst diese Aufgabe mittels der Gegenstände der unabhängigen Ansprüche. Unteransprüche geben bevorzugte Ausführungsformen wieder.

Ein Verfahren zur Übermittlung eines Dokuments von einer ersten Partei an eine zweite Partei umfasst Schritte des Bestimmens einer Sequenz von m Zwischenknoten, wobei jeder Zwischenknoten Inhaber eines privaten kryptographischen Schlüssels ist, zu dem ein korrespondierender öffentlicher kryptographischer Schlüssel bekannt ist; des Verschlüsselns des Dokuments nacheinander mit den öffentlichen Schlüsseln der Zwischenknoten der Sequenz; des Übermittelns des Dokuments an den Inhaber desjenigen öffentlichen Schlüssels, mit dem das vorliegende Dokument zuletzt verschlüsselt wurde sowie des Entschlüsselns des Dokuments mit dem privaten Schlüssel dieses Inhabers; des Wiederholens des vorangehenden Schritts, bis alle Zwischenknoten der Sequenz das Dokument entschlüsselt haben; und des Zustellens des Dokuments an die zweite Partei. Dabei werden die genannten Schritte für mehrere unterschiedliche Sequenzen durchgeführt, die aus einer Grundmenge von Zwischenknoten gebildet werden.

Dadurch kann sichergestellt werden, dass das Dokument alle m Zwischenknoten auf dem Weg von der ersten zur zweiten Partei durchläuft. Ein Zwischenknoten weiß nur, woher er das Dokument erhalten hat und wohin er es weiterzugeben hat, er kennt aber nicht die Anzahl bereits erfolgter oder noch erforderlicher Entschlüsselungen auf dem Weg des Dokuments von der ersten zur zweiten Partei. Das Dokument kommt nur dann bei der zweiten Partei an bzw. ist nur dann für die zweite Partei brauchbar, wenn alle Zwischenknoten der Sequenz durchlaufen wurden. Es ist bevorzugt, dass die Sequenz keine zwei gleichen Zwischenknoten enthält.

Ein Zwischenknoten kann als Person oder als Vorrichtung gebildet sein. Bevorzugt ist ein Zwischenknoten als kommunikativ vernetzte Einrichtung gebildet und kann weiter bevorzugt automatisch arbeiten.

Die Leistung kann im Dokument selbst bestehen, beispielsweise indem das Dokument ein elektronisch übertragbares Gut wie eine Konstruktionszeichnung, ein Textdokument, ein Bild oder ein Musikstück umfasst. Das Dokument kann auch einen Zugang zu einer Leistung ermöglichen, beispielsweise indem das Doku ment einen kryptographischen Schlüssel oder eine Authentifizierung enthält, mit dem ein Zugriff auf die Leistung möglich ist.

Das Dokument kann mit einer Leistung verbunden sein, wobei ein Zwischenknoten das Dokument nur dann übermittelt, wenn er die Leistung bezüglich eines vorbestimmten Kriteriums positiv bewertet. Anders ausgedrückt kann jeder Zwischenknoten die Rolle eines Notars einnehmen das Dokument bewerten. Die Zwischenknoten können ausgewählt sein, die Bewertung kompetent durchführen zu können.

Die zweite Partei kann eine zur Leistung korrespondierende Gegenleistung erbracht haben; wobei die Bewertung des Zwischenknoten eine Prüfung umfasst, ob die Gegenleistung erbracht wurde. Einer oder mehrere der Zwischenknoten können insbesondere an der Erbringung der Gegenleistung beteiligt gewesen sein. In einer besonders bevorzugten Ausführungsform besteht die Gegenleistung im Transfer von Geld, einer elektronischen Währung oder eines geldwerten digitalen Objekts. Der Transfer kann mit Mitteln einer Blockchain durchgeführt werden. Dabei kann die Blockchain auf mehreren Servern in Form eines "Distributed Ledger" gespeichert sein. Zumindest einer der Zwischenknoten kann ein solcher Server sein und über eine Kopie des Ledgers verfügen, der ein Verzeichnis mittels der Blockchain durchgeführter Transaktionen darstellt. Die Integrität des Ledgers kann über eine ständige Synchronisierung seiner Kopien auf verschiedenen Servern sicher gestellt sein. Eine Wahrscheinlichkeit, dass der Zwischenknoten eine zutreffende und kompetente Aussage über die erfolgte Gegenleistung machen kann, kann hoch sein.

In einer besonders bevorzugten Ausführungsform werden mehrere Sequenzen von jeweils m Zwischenknoten bestimmt und die Schritte c) bis f) werden für jede der bestimmten Sequenzen durchgeführt. Dabei werden die Sequenzen bevorzugt aus einer Grundmenge von n Zwischenknoten bestimmt.

Das Dokument kann dann nebenläufig über mehrere Wege über jeweils m Zwischenknoten übermittelt werden und jeder Zwischenknoten kann das Dokument beurteilen. Auf diese Weise ist es nicht erforderlich, dass beide Parteien Zwischenknoten finden, denen sie sämtlich vertrauen. Es kann ausreichen, dass jede Partei davon ausgeht, dass wenigstens die Hälfte der in der Grundmenge enthaltenen Zwischenknoten die Beurteilung entweder neutral oder zugunsten der jeweiligen Partei durchführt.

Die erste und die zweite Partei können sich vor Schritt a auf eine Festlegung für m einigen. Je mehr Zwischenknoten von einer Sequenz umfasst sind, desto mehr Zwischenknoten müssen eine positive Beurteilung abgeben, um ein vollständiges Entschlüsseln des Dokuments zu ermöglichen. Je mehr Sequenzen verwendet werden, desto größer ist die Wahrscheinlichkeit, dass die Nachricht zumindest einmal vollständig entschlüsselt wird.

In einer Ausführungsform werden aus der Grundmenge alle möglichen Teilmengen von m Zwischenknoten gebildet und für jede Teilmenge wird eine Sequenz bestimmt. Auf diese Weise kann durch Aushandeln von m zwischen den Parteien leichter zwischen einem erhöhten Aufwand und einer erhöhten Sicherheit abgewogen werden.

Eine Anzahl von Sequenzen der Länge m aus der Grundgesamtheit von n Zwischenknoten ist bestimmt durch einen Binomialkoeffizienten (n über m). Dieser kann insbesondere bei großen m oder kleinen n sehr groß werden, sodass sehr viele Dokumente an Zwischenknoten geschickt werden können. Um zu verhindern, dass ein Netzwerk von Zwischenknoten durch Dokumente geflutet und gegebenenfalls überlastet wird, können Zwischenknoten informiert werden, deren Dienste bei der Entschlüsselung, Beurteilung und Weiterleitung eines Dokuments nicht mehr benötigt werden.

Nach dem Zustellen eines der Dokumente bei der zweiten Partei können die jeweils m Zwischenknoten mehrerer oder aller Sequenzen benachrichtigt werden. Daraufhin kann wenigstens einer der benachrichtigten Zwischenknoten ein bereits eingetroffenes oder danach eintreffendes Dokument von der ersten an die zweite Partei verwerfen.

Die Sequenzen werden üblicherweise durch die erste Partei bestimmt. Die zweite Partei kennt dabei nicht die Menge der Zwischenknoten aller Sequenzen und kann daher nicht entscheiden, welche Zwischenknoten zu benachrichtigen sind. In einer Ausführungsform werden daher alle n Zwischenknoten benachrichtigt, insbesondere durch die zweite Partei.

In einer anderen Ausführungsform, in der die Sequenz der Zwischenknoten durch die erste Partei bestimmt wurde, benachrichtigt die zweite Partei die erste Partei, und die erste Partei benachrichtigt die Zwischenknoten der verwendeten Sequenzen.

In einer weiteren Ausführungsform umfasst das Dokument eine bevorzugt unverschlüsselte Identifikation und jeder Zwischenknoten kann vor dem Entschlüsseln oder Weiterleiten prüfen, ob mit der Identifikation ein aktiver Dokumententransfer verbunden ist. Ist dies nicht der Fall, so kann der Zwischenknoten das Dokument verwerfen. Der Dokumententransfer kann von der ersten Partei als aktiv gesetzt werden, bevorzugt bevor sie ein verschlüsseltes Dokument an einen der Zwischenknoten versendet

Ob ein Dokumententransfer aktiv ist, kann an einer zentralen Stelle hinterlegt sein. Beispielsweise kann ein dedizierter Server zur Führung aktiver Dokumententransfers vorgesehen sein. In einer Ausführungsform übernimmt die erste Partei diese Aufgabe für einen ihr zugeordneten Dokumententransfer. Empfängt die zweite Partei wenigstens einmal das Dokument, so kann sie den korrespondierenden Dokumententransfer von der ersten Partei zur zweiten Partei am Server auf inaktiv setzen.

Eine Reihenfolge der Zwischenknoten in einer Sequenz kann zufällig oder pseudo-zufällig bestimmt werden. Die Auswahl von m Zwischenknoten aus den n verfügbaren Zwischenknoten kann dadurch unparteiischer sein.

In einer weiteren Ausführungsform kann das mehrfache Verschlüsseln des Dokuments auch durch die Zwischenknoten erfolgen. Dazu kann die erste Partei Dazu einen Zwischenknoten auswählen, das Dokument mit dessen öffentlichem Schlüssel verschlüsseln und das Resultat zusammen mit einer Angabe noch durchzuführender Verschlüsselungen an den ausgewählten Zwischenknoten übermitteln. Der empfangende Zwischenknoten kann zunächst die Angabe dekrementieren. Ist das Resultat null, so kann er das Dokument der zweiten Partei zustellen. Optional verschlüsselt er das Dokument vor dem Zustellen noch mit dem öffentlichen Schlüssel der zweiten Partei. Andernfalls, wenn die dekrementierte Angabe größer als null ist, kann der Zwischenknoten einen weiteren Zwischenknoten auswählen, das Dokument mit dessen öffentlichem Schlüssel verschlüsseln und ihm das Resultat zustellen. Dieser Zwischenknoten kann mit dem empfangenen Dokument genauso verfahren.

In einer Variante kann die erste Partei auch eine Angabe mitsenden, mit wie vielen Schlüsseln das Dokument mindestens verschlüsselt werden soll und ein Zwischenknoten kann, sobald diese Anzahl Verschlüsselungen erreicht ist, selbst entscheiden, ob er einen weiteren Verschlüsselungsschritt durchführen oder das Dokument der zweiten Partei zustellt. Diese Entscheidung kann zufällig mit einer vorbestimmten Wahrscheinlichkeit erfolgen. In einer anderen Variante kann das Dokument jeweils an einen anderen Zwischenknoten versandt werden als den, mit dessen öffentlichem Schlüssel das Dokument zuletzt verschlüsselt wurde. Der andere Zwischenknotenkann insbesondere zufällig bestimmt sein. In noch einer Variante kann die erste Partei die Sequenz der Zwischenknoten, die das Dokument nacheinander verschlüsseln sollen, dem Dokument lesbar beifügen. Die Zwischenknoten können das Dokument in der umgekehrten Reihenfolge der vorbestimmten Sequenz verschlüsseln und weiterleiten bzw. zustellen.

Die erste Partei kann das Dokument vor Schritt c verschlüsseln und die zweite Partei kann das Dokument nach Schritt f entsprechend entschlüsseln. Dadurch kann verhindert werden, dass ein Zwischenknoten, der das Dokument an die zweite Partei weiterleitet, in Besitz des vollständig entschlüsselten, im Klartext vorliegenden Dokuments ist. Die zusätzliche Verschlüsselung kann mittels eines symmetrischen oder asymmetrischen Verschlüsselungsverfahrens erfolgen. In einer bevorzugten Variante wird das gleiche asymmetrische Verschlüsselungsverfahren wie für die übrigen Verschlüsselungen für die Zwischenknoten verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

Figur 1    ein exemplarisches System zur gesicherten Übertragung eines Dokuments;
Figur 2    ein beispielhaftes, mehrfach verschlüsseltes Dokument;
Figur 3    beispielhafte Sequenzen aus einer ebenfalls beispielhaften Grundgesamtheit von Zwischenknoten

darstellt.

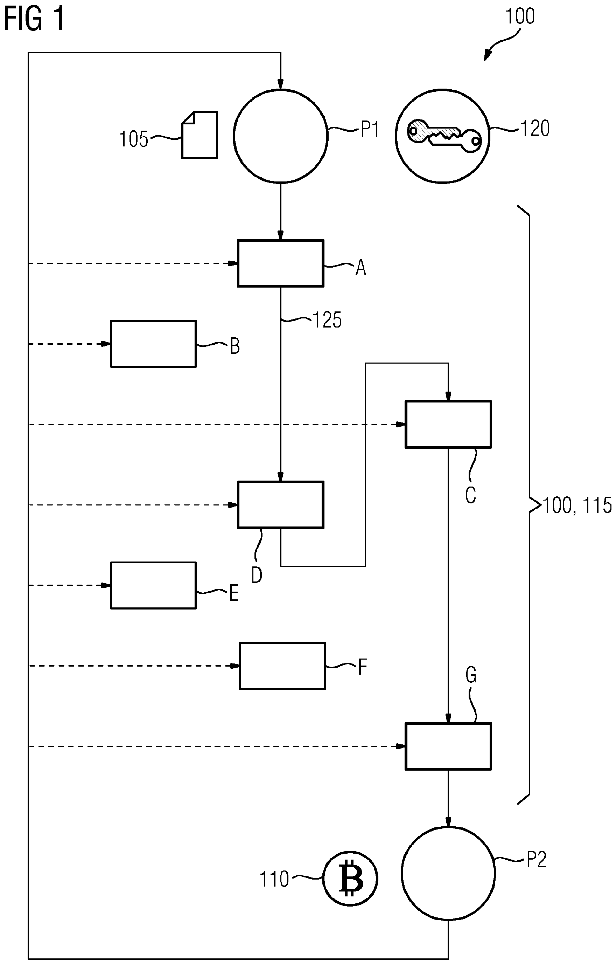

Figur 1 zeigt ein beispielhaftes System 100. Anhand des Systems 100 wird im Folgenden auch eine Vorgehensweise erläutert, die als Verfahren 100 aufgefasst werden kann.

Eine erste Partei P1 und eine zweite Partei P2 einigen sich auf einen Austausch zweiter Leistungen. Eine Leistung in Form eines Dokuments 105 soll von der ersten Partei P1 an die zweite Partei P2 übermittelt werden. Eine zugeordnete Gegenleistung besteht in der Übertragung eines Geldbetrags 110 von der zweiten Partei P2 an die erste Partei P1.

Im vorliegenden Beispiel wird in einer zeitlichen Abfolge zuerst die Gegenleistung erbracht, indem der Geldbetrag 110 übertragen wird. Der Geldbetrag 110 kann insbesondere durch eine digitale Währung wie Bitcoin repräsentiert sein, die bevorzugt auf einer Blockchain basiert. Dabei kann eine Transaktion jeweils kryptographisch mit einer vorherigen Transaktion verknüpft werden, sodass eine Transaktion nicht unbemerkt nachträglich verändert werden kann. Die Blockchain wird bevorzugt in einem Distributed Ledger 115 (etwa: verteiltes Register) gehalten, also einem öffentlichen Verzeichnis, das auf einer Vielzahl unterschiedlicher Rechner repliziert wird. In der Darstellung von Figur 1 sind exemplarisch Rechner A bis G angedeutet, die zusammen den Distributed Ledger realisieren.

Die Übertragung des Geldbetrags 110 umfasst zunächst eine Transaktion, die auf einem der Rechner A bis G in das lokale Verzeichnis eingetragen wird. Später wird die Transaktion an die anderen Rechner A bis G repliziert, sodass diese die gleichen Informationen über die Transaktion erhalten. In der Darstellung von Figur 1 ist der Transfer der Gegenleistung als durchgezogene Linie von der zweiten Partei P2 zur ersten Partei P1 dargestellt. Die Replikation von Informationen über diesen Transfer an alle Rechner A bis G ist durch unterbrochene Linien dargestellt.

Für eine bestimmte Zeit nach dem Transfer kann also die Information, ob der Transfer stattgefunden hat oder nicht, nicht an allen Rechnern des Distributed Ledgers 115 gleich sein. Ein Rechner A bis G, der keine Information über eine bestimmte Transaktion hat, könnte noch nicht die aktuellsten Informationen haben - oder die Transaktion hat nicht stattgefunden. Ein Rechner A bis G, der Kenntnis von der Transaktion hat, könnte eine Information verarbeiten, die später im Rahmen der Replikation als unwahr erkannt wird - oder die Information ist korrekt und die Transaktion gültig.

Damit die erste Partei P1 der zweiten Partei P2 trotzdem möglichst verzögerungsfrei das Dokument 105 zusenden kann, wird vorgeschlagen, dass eine vorbestimmte Auswahl der Rechner A bis G prüft, ob die Gegenleistung erbracht wurde und nur wenn alle prüfenden Rechner A bis G zum gleichen, positiven Ergebnis kommen, eine Zustellung des Dokuments 105 zur zweiten Partei P2 ermöglicht wird.

Dazu ist vorteilhaft, wenn zumindest einige der im Folgenden als Zwischenknoten bezeichneten Rechner A bis G gleichzeitig Teil oder Träger des Distributed Ledgers 115 sind. Vorliegend wird vereinfachend davon ausgegangen, dass alle Rechner A bis G, die als Zwischenknoten dienen können, gleichzeitig den Distributed Ledger 115 oder einen Teil davon tragen. In anderen Ausführungsformen können diejenigen Rechner A bis G, die Zwischenknoten darstellen, und die Rechner A bis G, die den Distributed Ledger tragen, auch auseinander fallen.

Jedem Zwischenknoten A bis G ist ein kryptographisches Schlüsselpaar zugeordnet, das einen öffentlichen Schlüssel und einen privaten Schlüssel umfasst. Eine Verschlüsselung mit einem öffentlichen Schlüssel kann nur mit dem korrespondierenden privaten Schlüssel rückgängig gemacht werden und umgekehrt. Die öffentlichen Schlüssel eines oder mehrerer Zwischenknoten A bis G können beispielsweise an einem Schlüsselserver 120 oder auf andere Weise zugänglich gemacht sein.

Zunächst wird eine Sequenz 125 von Zwischenknoten A bis G bestimmt, über die das Dokument 105 von P1

EP 3 591 925 B1

zu P2 übertragen werden soll. Zur Bildung der Sequenz 125 können sich die Parteien P1 und P2 einigen, welche Länge m die Sequenz 125 haben soll. Die Reihenfolge der Zwischenknoten A bis G in der Sequenz 125 ist allgemein von untergeordneter Bedeutung und kann zufällig gewählt werden. In der Darstellung von Figur 1 wurde beispielhaft eine Sequenz 125 gewählt, die von P1 über die Zwischenknoten A-D-C-G zu P2 verläuft.

Die erste Partei P1 verschlüsselt nun das Dokument 105 nacheinander mit den öffentlichen Schlüsseln der Sequenz 125 in umgekehrter Reihenfolge der geplanten Beförderung. Vorliegend würde also zuerst eine Verschlüsselung des im Klartext vorliegenden Dokuments 105 mit dem öffentlichen Schlüssel von G erfolgen, das Resultat der Verschlüsselung würde dann mit dem öffentlichen Schlüssel von C verschlüsselt, dann das Resultat in entsprechender Weise mit dem von D und das Ergebnis schließlich mit dem von A.

Das solchermaßen mehrfach verschlüsselte Dokument 105 kann nur vollständig entschlüsselt und der zweiten Partei P2 zugänglich gemacht werden, wenn alle Zwischenknoten A bis G, deren öffentliche Schlüssel verwendet wurden, in der richtigen Reihenfolge das Dokument 105 mit ihrem jeweiligen privaten Schlüssel entschlüsseln und das Resultat an den nächsten Zwischenknoten A bis G bzw. die zweite Partei P2 weiterleiten.

Bevorzugt wird aber nicht nur eine Sequenz 125 erzeugt, sondern mehrere, und für jede Sequenz 125 wird das Dokument 105 auf die beschriebene Weise mehrfach verschlüsselt. Eines, mehrere oder alle der mehrfach verschlüsselten Dokumente 105 können auch der zweiten Partei P2 zur Verfügung gestellt werden, sogar bevor diese die Gegenleistung in Form des Transfers des Geldbetrags 110 erbracht hat. Das Dokument 105 kann einen unverschlüsselten Teil umfassen, anhand dessen die zweite Partei die Leistung prüfen kann. Beispielsweise kann das Dokument 105 Informationen in unterschiedlichen Detaillierungsgraden umfassen und eine weniger detaillierte Ansicht kann unverschlüsselt sein, während eine detailliertere Ansicht verschlüsselt sein kann. Für den gleichen Zweck können auch ein unverschlüsseltes und ein verschlüsseltes Dokument 105 verwendet werden. Beispiele für solche Dateien 105 umfassen CAD-Daten, etwa zur Herstellung einer Maschine oder zum Bau eines Gebäudes, oder Katasterdaten zu einer Immobilie. Die Sequenzen 125 können gebildet werden, indem aus einer Gesamtheit von n Zwischenknoten A bis G m ausgewählt werden, und zwar bevorzugt zufällig oder pseudo-zufällig. Die Auswahl trifft üblicherweise die sendende erste Partei P1. Es ist bevorzugt, dass in jeder Sequenz 125 lauter verschiedene Zwischenknoten A bis G verwendet werden. Eine Reihenfolge der Zwischenknoten A bis G in einer Sequenz 125 ist dabei zunächst nicht relevant. Aus der Menge von n Zwischenknoten A bis G können "n über m" (Binomialkoeffizient) verschiedene Sequenzen 125 gebildet werden. In einer Ausführungsform werden alle möglichen Sequenzen 125 für gegebene n und m gebildet und die Datei 105 wird wie oben beschrieben ist entsprechend mehrfach verschlüsselt. Die Auswahl von m aus n Zwischenknoten A bis G muss aber weder systematisch noch erschöpfend sein. Es wird allerdings bevorzugt, dass beliebige zwei der gebildeten Sequenzen 125 dahingehend verschieden sind, dass eine der Sequenzen 125 wenigstens einen Zwischenknoten A bis G umfasst, den die andere Sequenz 125 nicht umfasst.

Die erste Partei P1 oder die zweite Partei P2 können jede der mehrfach verschlüsselten Dateien 105 jeweils an den Zwischenknoten A bis G übermitteln, dessen öffentlicher Schlüssel zuletzt zur Verschlüsselung der Datei 105 verwendet wurde. Eine Identifikation des Zwischenknotens A bis G kann unverschlüsselt im Dokument 105 enthalten sein. Ein Zwischenknoten A bis G, der das Dokument 105 erhält, kann es mittels seines privaten Schlüssels um eine Stufe entschlüsseln. Meistens wird das resultierende Dokument 105 jedoch erneut verschlüsselt sein, und zwar für einen anderen Zwischenknoten A bis G. Die Information, um welchen der Zwischenknoten A bis G es sich handelt, kann durch das Entschlüsseln lesbar werden.

Der entschlüsselnde Zwischenknoten A bis G kann das Dokument 105 daraufhin an den nächsten Zwischenknoten A bis G weiterleiten. Liegt das Dokument 105 nach dem Entschlüsseln im Klartext vor oder ist der nächste Adressat die zweite Partei P2, so kann das Dokument 105 ihr zugestellt werden. Die zweite Partei P2 kann gegebenenfalls eine zusätzliche Entschlüsselung durchführen, falls eine solche durch die erste Partei vor der Kettenverschlüsselung durchgeführt wurde. In einer anderen Ausführungsform zählt die zweite Partei P2 bezüglich der Weiterleitung und Entschlüsselung als Zwischenknoten und kann die letzte Entschlüsselung in entsprechender Weise durchführen.

Es wird nun vorgeschlagen, dass jeder Zwischenknoten A bis G, der ein verschlüsseltes Dokument 105 erhält, eine Bewertung des Dokuments 105 bezüglich eines vorbestimmten Kriteriums durchführt. Die Bewertung umfasst bevorzugt den Umstand, ob eine zum Dokument 105 korrespondierende Gegenleistung erbracht wurde oder nicht. Dazu kann das Dokument 105 einen entsprechenden Hinweis auf die Gegenleistung, hier in Form des Transfers des Geldbetrags 110, in bevorzugt unverschlüsselter Form umfassen.

Ist ein Zwischenknoten A bis G Träger des Distributed Ledgers 115, kann er die Beurteilung auf der Basis lokal verfügbarer Daten durchführen. Anderenfalls kann er einen der Rechner A bis G auswählen, der die nachgesuchte Information hat bzw. haben sollte und bei diesem eine entsprechende Anfrage stellen.

Stellt sich heraus, dass die Gegenleistung nicht oder nicht vollständig erbracht wurde, so kann der Zwischenknoten A bis G das erhaltene Dokument 105 verwerfen. Die nachfolgenden Zwischenknoten A bis G führen dann in dieser Sequenz 125 keine Beurteilung mehr durch. Andernfalls, wenn die Gegenleistung erbracht wurde, kann der Zwischenknoten A bis G das Dokument 105 weiterleiten.

Angenommen, die Gesamtheit der n Zwischenknoten A bis G ist in einem gegebenen Fall unterteilbar in einer erste Menge von positiv bewertenden und eine zweite Menge von negativ bewertenden Rechnern. Dann kann die zweite Partei P2 genau dann ein vollständig entschlüsseltes Dokument 105 erhalten, wenn unter den gebildeten Sequenzen 125 wenigstens eine ist, die ausschließlich Zwischenknoten A bis G der ersten Menge enthält. Enthält jede der gebildeten Sequenzen 125 wenigstens einen Zwischenknoten A bis G der zweiten Menge, so wird das Dokument 105 nicht an P2 zugestellt.

Wird eine große Anzahl Sequenzen 125 gebildet, so kann diese zu einer großen Last im Netz der Zwischenknoten A bis G bilden. Nachdem die zweite Partei P2 eine vollständig entschlüsselte Version der Datei 105 vorliegen hat, können alle zur gleichen Transaktion zwischen P1 und P2 gehörenden, verschlüsselten Dateien 105 an den Zwischenknoten A bis G verworfen werden, sodass unnötige Verschlüsselungen oder Kommunikationen verringert werden können.

In einer Ausführungsform schickt die zweite Partei bei Vorliegen der Datei 105 im Klartext eine Erfolgsmeldung an die erste Partei P1. Diese kennt alle Zwischenknoten A bis G aller von ihr gebildeten Sequenzen 125 und kann die betroffenen Zwischenknoten A bis G direkt benachrichtigen.

In einer anderen Ausführungsform kann jeder Zwischenknoten A bis G vor einer Entschlüsselung oder Weiterleitung bei der ersten Partei P1 oder bei der zweiten Partei P2 nachfragen, ob der bevorstehende Schritt noch erforderlich ist oder der Transfer der Datei 105 bereits erfolgreich abgeschlossen ist. Für diese Auskunft kann auch eine dedizierte Stelle gebildet sein, die sich von P1 und P2 unterscheidet. In einer Ausführungsform kann der Schlüsselserver 120 die Auskunft erteilen. Die Auskunft kann mit der aktiven Benachrichtigung von Zwischenknoten A bis G auch kombiniert werden.

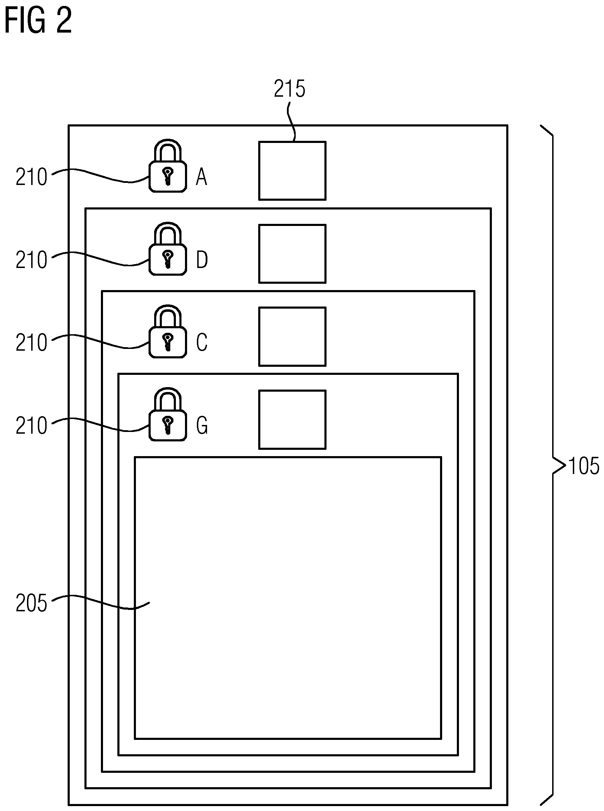

Figur 2 zeigt ein beispielhaftes, mehrfach verschlüsseltes Dokument 105 wie es in einem System 100 von der ersten Partei P1 zur zweiten Partei P2 übermittelt werden kann. Das dargestellte Dokument 105 ist kompatibel mit dem in Figur 1 dargestellten Beispiel indem die eigentlichen Nutzdaten 205, an denen die zweite Partei P2 interessiert ist, nacheinander mit den öffentlichen Schlüsseln der Zwischenknoten G, C, D und A verschlüsselt wurden. Die Verschlüsselung wird bevorzugt derart durchgeführt, dass am verschlüsselten Dokument 105 erkennbar ist, mit dem öffentlichen Schlüssel welches der Zwischenknoten A bis G die äußerste - und einzig erkennbare - Verschlüsselung durchgeführt wurde. Dazu kann insbesondere eine Identifikation 210 (Signatur) der Verschlüsselung angegeben sein.

Eine zustellfähige Adresse für den Zwischenknoten A bis G kann ebenfalls angegeben sein oder beispielsweise auf der Basis der Identifikation 210 vom Schlüsselserver 120 erfragt werden. Das Dokument 105 kann so dem Zwischenknoten A bis G übermittelt werden, der in der Lage sein sollte, die Verschlüsselung zu lösen.

Eine eindeutige Identifikation 215 des Dokuments 105 bzw. eines zugehörigen Transfers vom Sender P1 zum Empfänger P2 kann wie dargestellt auf jeder Verschlüsselungsebene wiederholt vorgesehen sein, um eine versehentliche oder unbefugte Änderung zu vermeiden. Der Transfer kann alle Dokumente 105 in beliebigen Verschlüsselungen umfassen, die aus dem gleichen Grund von der ersten Partei P1 zur zweiten Partei P2 übermittelt werden können. Sind die Nutzdaten 205 bei der zweiten Partei P2 eingetroffen, verlieren alle anderen Dokumente 105 des gleichen Transfers ihre Bedeutung.

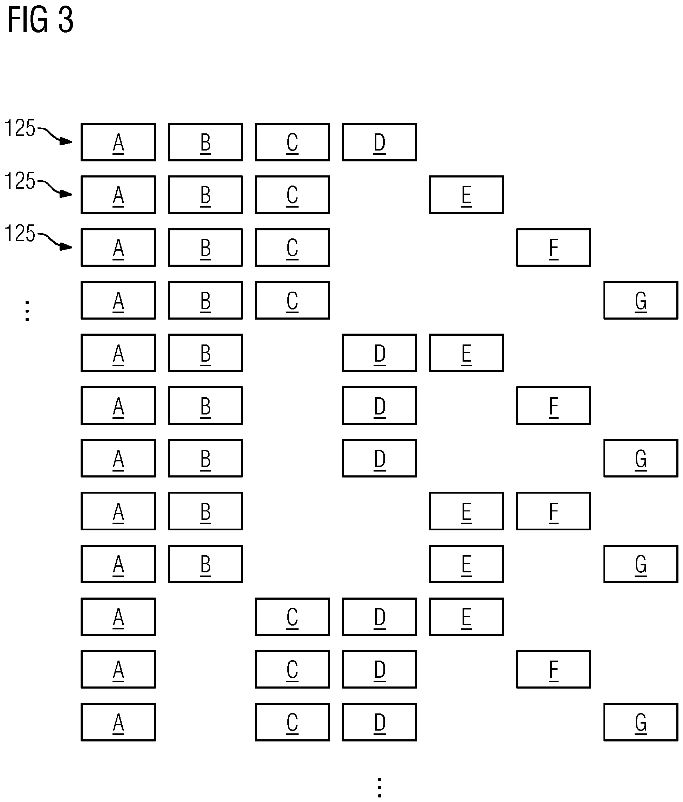

Figur 3 zeigt eine beispielhafte Darstellung möglicher Sequenzen 125 für das in den Figuren 1 und 2 angeführte Beispiel. Die Grundgesamtheit besteht aus n=7 Zwischenknoten A bis G und aus dieser sollen Sequenzen 125 mit jeweils m=4 verschiedenen Zwischenkonten A bis G gebildet werden. Die Anzahl der aus dieser Konstellation ableitbaren, paarweise voneinander verschiedenen Sequenzen 125 beträgt:

$$N = \binom{n}{m} = \binom{7}{4} = \frac{n!}{m!(n-m)!} = \frac{5040}{144} = 35.$$

In Figur 3 sind nur einige beispielhafte Kombinationen der Zwischenknoten A bis G tabellenartig dargestellt, wobei jeweils eine Zeile einer Sequenz 125 entspricht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren (100) zur Übermittlung eines Dokuments (105) von einer ersten Partei (P1) zu einer zweiten Partei (P2), wobei das Verfahren (100) folgende Schritte umfasst:

   a) Bestimmen von verschiedenen Sequenzen (125) von jeweils m Zwischenknoten (A-G) aus einer Grundmenge von n Zwischenknoten (A-G);

b) wobei Rechner als Zwischenknoten dienen und jeder Zwischenknoten (A-G) Inhaber eines privaten kryptographischen Schlüssels ist, zu dem ein korrespondierender öffentlicher kryptographischer Schlüssel bekannt ist;

c) Verschlüsseln des Dokuments (105) nacheinander mit den öffentlichen Schlüsseln der Zwischenknoten (A-G) einer der Sequenzen (125);

d) Übermitteln des Dokuments (105) an den Inhaber desjenigen öffentlichen Schlüssels, mit dem das vorliegende Dokument (105) zuletzt verschlüsselt wurde, und Entschlüsseln des Dokuments (105) mit dem privaten Schlüssel dieses Inhabers;

e) Wiederholen von Schritt d, bis alle Zwischenknoten (A-G) der Sequenz (125) das Dokument (105) entschlüsselt haben; und

f) Zustellen des Dokuments (105) an die zweite Partei (P2),

g) wobei die Schritte c) bis f) auch für alle anderen der Sequenzen (125) durchgeführt werden.

2. Verfahren (200) nach Anspruch 1, wobei beliebige zwei der gebildeten Sequenzen (125) dahingehend verschieden sind, dass eine der Sequenzen (125) wenigstens einen Zwischenknoten (A-G) umfasst, den die andere Sequenz (125) nicht umfasst.

3. Verfahren (100) nach Anspruch 1 oder 2, wobei das Dokument (105) eine Leistung repräsentiert, der eine Gegenleistung zugeordnet ist; wobei der Zwischenknoten (A-G) prüft, ob die Gegenleistung erbracht wurde; und das Dokument (105) nur dann übermittelt, wenn dies der Fall ist.

4. Verfahren (100) nach Anspruch 3, wobei der Zwischenknoten (A-G) an der Erbringung der Gegenleistung beteiligt war.

5. Verfahren (100) nach einem der vorangehenden Ansprüche, wobei sich die erste und die zweite Partei (P2) vor Schritt a auf eine Festlegung für m einigen.

6. Verfahren (100) nach einem der vorangehenden Ansprüche, wobei aus der Grundmenge alle möglichen Teilmengen von m Zwischenknoten (A-G) gebildet werden und für jede Teilmenge eine Sequenz (125) bestimmt wird.

7. Verfahren (100) nach einem der vorangehenden Ansprüche, wobei die jeweils m Zwischenknoten (A-G) aller Sequenzen (125) nach dem Zustellen eines der Dokumente (105) bei der zweiten Partei (P2) benachrichtigt werden; und daraufhin wenigstens einer der Zwischenknoten (A-G) ein bereits eingetroffenes oder danach eintreffendes Dokument (105) von der ersten an die zweite Partei (P2) verwirft.

8. Verfahren (100) nach Anspruch 7, wobei die Sequenz (125) der Zwischenknoten (A-G) durch die erste Partei (P1) bestimmt wurde; und wobei die zweite Partei (P2) die erste Partei (P1) und die erste Partei (P1) die Zwischenknoten (A-G) benachrichtigt.

9. Verfahren (100) nach einem der vorangehenden Ansprüche, wobei eine Reihenfolge der Zwischenknoten (A-G) in einer Sequenz (125) zufällig bestimmt wird.

10. Verfahren (100) nach einem der vorangehenden Ansprüche, wobei die erste Partei (P1) das Dokument (105) vor Schritt c) verschlüsselt und die zweite (P2) das Dokument (105) nach Schritt f entsprechend entschlüsselt.

## Claims

1. Method (100) for transmitting a document (105) from a first party (P1) to a second party (P2), wherein the method (100) comprises the following steps:

a) determining various sequences (125) of in each case m intermediate nodes (A-G) from a base set of n intermediate nodes (A-G);

b) wherein computers serve as intermediate nodes and each intermediate node (A-G) holds a private cryptographic key for which a corresponding public cryptographic key is known;

c) encrypting the document (105) in succession with the public keys of the intermediate nodes (A-G) of one of the sequences (125);

d) transmitting the document (105) to the holder of that public key with which the present document (105) was last encrypted, and decrypting the document (105) with the private key of this holder;

e) repeating step d until all of the intermediate nodes (A-G) of the sequence (125) have decrypted the document (105); and

f) delivering the document (105) to the second party (P2),

g) wherein steps c) to f) are also performed for all of the other sequences (125).

2. Method (200) according to Claim 1, wherein any two of the sequences (125) that are formed differ in that one of the sequences (125) comprises a least one intermediate node (A-G) that the other sequence (125) does not comprise.

3. Method (100) according to Claim 1 or 2, wherein the document (105) represents a service to which a return service is assigned; wherein the intermediate node (A-G) inspects whether the return service was rendered; and the document (105) is transmitted only when this is the case.

4. Method (100) according to Claim 3, wherein the intermediate node (A-G) was involved in the rendering of the return service.

5. Method (100) according to one of the preceding claims, wherein the first and the second party (P2) agree on a definition for m before step a.

6. Method (100) according to one of the preceding claims, wherein all of the possible subsets of m intermediate nodes (A-G) are formed from the base set and a sequence (125) is determined for each subset.

7. Method (100) according to one of the preceding claims, wherein the in each case m intermediate nodes (A-G) of all of the sequences (125) are notified to the second party (P2) after one of the documents (105) has been delivered; and at least one of the intermediate nodes (A-G) then rejects a document (105) from the first to the second party (P2) that has already arrived or arrives thereafter.

8. Method (100) according to Claim 7, wherein the sequence (125) of the intermediate nodes (A-G) was determined by the first party (P1); and wherein the second party (P2) notifies the first party (P1) and the first party (P1) notifies the intermediate nodes (A-G).

9. Method (100) according to one of the preceding claims, wherein an order of the intermediate nodes (A-G) in a sequence (125) is determined randomly.

10. Method (100) according to one of the preceding claims, wherein the first party (P1) encrypts the document (105) before step c) and the second party (P2) accordingly decrypts the document (105) after step f.


**Revendications**

1. Procédé (100) pour transmettre un document (105) d'une première partie (P1) vers une deuxième partie (P2), le procédé (100) comprenant les étapes suivantes :

   a) détermination de différentes séquences (125) de respectivement m nœuds intermédiaires (A-G) à partir d'un ensemble de base de n nœuds intermédiaires (A-G) ;
   b) des ordinateurs servant de nœuds intermédiaires et chaque nœud intermédiaire (A-G) étant titulaire d'une clé cryptographique privée pour laquelle est connue une clé cryptographique publique correspondante ;
   c) cryptage du document (105) successivement avec les clés publiques des nœuds intermédiaires (A-G) d'une des séquences (125) ;
   d) transmission du document (105) au titulaire de la clé publique avec laquelle ledit document (105) a été crypté en dernier lieu, et décryptage du document (105) avec la clé privée de ce titulaire ;
   e) répétition de l'étape d jusqu'à ce que tous les nœuds intermédiaires (A-G) de la séquence (125) aient décrypté le document (105) et
   f) notification du document (105) à la deuxième partie (P2),
   g) les étapes c) à f) étant également exécutées pour toutes les autres séquences (125).

2. Procédé (200) selon la revendication 1, deux quelconques des séquences formées (125) étant différentes en ce sens qu'une des séquences (125) comprend au moins un nœud intermédiaire (A-G) que l'autre séquence (125) ne comprend pas.

3. Procédé (100) selon la revendication 1 ou 2, le document (105) représentant une prestation à laquelle est associée une contrepartie, le nœud intermédiaire (A-G) vérifiant si la contrepartie a été fournie et ne transmettant le document (105) que si c'est le cas.

4. Procédé (100) selon la revendication 3, le nœud intermédiaire (A-G) étant impliqué dans la fourniture de la contrepartie.

5. Procédé (100) selon l'une des revendications précédentes, la première et la deuxième partie (P2) se mettant d'accord, avant l'étape a, sur une détermination de m.

6. Procédé (100) selon l'une des revendications précédentes, tous les sous-ensembles possibles de m nœuds intermédiaires (A-G) étant formés à partir de l'ensemble de base et une séquence (125) étant déterminée pour chaque sous-ensemble.

7. Procédé (100) selon l'une des revendications précédentes, les respectivement m nœuds intermédiaires (A-G) de toutes les séquences (125) étant informés après la notification de l'un des documents (105) à la deuxième partie (P2) et au moins un des nœuds intermédiaires (A-G) rejetant ensuite de la première à la deuxième partie (P2) un document (105) déjà arrivé ou arrivant ensuite.

8. Procédé (100) selon la revendication 7, la séquence (125) des nœuds intermédiaires (A-G) ayant été déterminée par la première partie (P1), et la deuxième partie (P2) informant la première partie (P1), et la première partie (P1) informant les nœuds intermédiaires (A-G).

9. Procédé (100) selon l'une des revendications précédentes, une série des nœuds intermédiaires (A-G) étant déterminée aléatoirement dans une séquence (125).

10. Procédé (100) selon l'une des revendications précédentes, la première partie (P1) cryptant le document (105) avant l'étape c) et la deuxième (P2) décryptant le document (105) en conséquence après l'étape f.

FIG 1

FIG 2

215

210 — 🔒 A

210 — 🔒 D

210 — 🔒 C

210 — 🔒 G

205

105

# FIG 3

125 → | A | B | C | D |

125 → | A | B | C | | E |

125 → | A | B | C | | | F |

⋮ | A | B | C | | | | G |

| A | B | | D | E |

| A | B | | D | | F |

| A | B | | D | | | G |

| A | B | | | E | F |

| A | B | | | E | | G |

| A | | C | D | E |

| A | | C | D | | F |

| A | | C | D | | | G |

⋮

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Untraceable electronic mail, return addresses, and digital pseudonyms. **DAVID L. CHAUM.** Communications Of The ACM, Association for Computing Machinery. INC, United STates, 01. Februar 1981, vol. 24, 84-90

- **ROGER DINGLEDINE ; NICK MATHEWSON ; PAUL SYVERSON.** TOR: The Second-Generation Onion Router. *The Free Haven Project,* 27. Juli 2004, 1-18
- **DAVID GOLDSCHLAG et al.** Onion Routing for Anonymous and Private Internet Connections. *ist ebenfalls Stand der Technik*